# EUROPÄISCHE PATENTANMELDUNG

(11) **EP 1 342 989 A2**
(43) Veröffentlichungstag der Anmeldung: **10.09.2003**
(21) Anmeldenummer: 03002762.7
(22) Anmeldetag: 07.02.2003
(51) Int. Cl.: G01C 15/00, G01S 17/89, G01S 17/42

(54) **Verfahren zur Aufnahme eines Objektraumes**

(30) Priorität: 04.03.2002 AT 3292002
(71) Anmelder: Riegl Laser Measurement Systems Gmbh, 3580 Horn (AT)
(72) Erfinder: Riegl, Johannes, Dr., 3754 Trabenreith (AT); Ullrich, Andreas, Dr., 3003 Gablitz (AT); Reichert, Rainer, Ing., 3580 Horn (AT)
(74) Vertreter: Révy von Belvárd, Peter

(57) **Zusammenfassung**

Ein Verfahren zur Aufnahme eines Objektraumes arbeitet mit einem opto-elektronischen Entfernungsmesser nach einem Signal-Laufzeitverfahren sowie mit einer Sendeeinrichtung zum Aussenden von Laser-Strahlung und einer Empfangseinrichtung zum Empfangen von Laserstrahlung, die von im Zielraum befindlichen Objekten reflektiert wird. Sowohl der Sende- als auch der Empfangseinrichtung optische Systeme sind vorgeschaltet. Einer Scan-Einrichtung zur Ablenkung der optischen Achsen von Sende- und Empfangseinrichtung in zwei orthogonale Richtungen ist mit Positions- bzw. Winkelsensoren verbunden, die zu jeder Abtastrichtung der optischen Achsen entsprechende Koordinaten ausgeben. Eine Auswerteeinrichtung ermittelt aus der Laufzeit bzw. der Phasenlage des ausgesandten optischen Signals Entfernungswerte, wobei jedem Entfernungswert entsprechende Koordinaten zugeordnet sind. Das optische System (10) des Senders (9), und gegebenenfalls das (13) des Empfängers (14), wird in an sich bekannter Weise zur Minimierung der Auftreff-Fläche des Sendestrahles (15) auf ein Ziel auf mindestens ein im Objektraum befindliches Ziel fokussiert.

## Beschreibung

Die Erfindung bezieht sich auf ein Verfahren zur Aufnahme eines Objektraumes mit einem opto-elektronischen Entfernungsmesser nach einem Signal-Laufzeitverfahren mit einer Sendeeinrichtung zum Aussenden von optischen Signalen, insbesondere von Laser-Strahlung, und einer Empfangseinrichtung zum Empfangen von optischen Signalen, insbesondere von Laserstrahlung, die von im Zielraum befindlichen Objekten reflektiert wird, wobei sowohl der Sende- als auch der Empfangseinrichtung optische Systeme vorgeschaltet sind. Im besonderen weist der Entfernungsmesser eine Scan-Einrichtung zur Ablenkung der optischen Achsen von Sende- und Empfangseinrichtung in vorzugsweise zwei orthogonale Richtungen auf. Der Entfernungsmesser umfaßt ferner eine Auswerteeinrichtung, die aus der Laufzeit bzw. der Phasenlage des ausgesandten optischen Signals Entfernungswerte ermittelt, wobei jedem Entfernungswert entsprechende Koordinaten zugeordnet sind.

Systeme der oben beschriebenen Art werden für verschiedenste Zweck eingesetzt. So werden sogenqnnte Laserscanner in der Architektur zum Vermessen von Bauwerken eingesetzt, insbesondere von historischen Bauwerken, für welche keine ausreichende Dokumentation verfügbar ist. In gleicher Weise können Laserscanner zur Dokumentation von künstlerischen Plastiken eingesetzt werden. Weitere Anwendungen betreffen die Dokumentation von Schadensfällen, zum Beispiel nach Verkehrsunfällen oder nach Schadensereignissen in Industrieanlagen, an Maschinen etc. Ferner werden solche Systeme zur Vermessung von Geländeverläufen, insbesondere nach Muren- oder Lawinenabgängen eingesetzt, um nur einige Beispiele zu nennen. Die Systeme liefern primär sogenannte Punktewolken, die die abgetasteten Oberflächen repräsentieren. In vielen Fällen dienen diese Systeme dazu, sogenannte Entfernungsbilder zu erzeugen, in welchen typischerweise die Entfernungen vom Aufnahmeort in Falschfarben codiert sind. In anderen Fällen werden von dem Objekt Aufnahmen von verschiedenen Standorten aus gemacht, wobei aus den verschiedenen Data-Files 3-D-Modelle des Objektes berechnet werden, die am Rechner dann aus beliebigen Blickwinkeln dargestellt werden können. Mit einem der bekannten Fast-Prototyping-Verfahren kann mit dem Data-File eines solchen 3-D-Modelles auch ein körperliches Modell in einem beliebigen Maßstab hergestellt werden.

Für alle die oben genannten Anwendungen ist es zur Erzielung optimaler Ergebnisse wesentlich, daß das System mit einer entsprechend hohen räumlichen Auflösung arbeitet, so daß die Strukturen des Objektes mit den nötigen Details wiedergegeben werden können.

Moderne opto-elektronische Entfernungsmesser verwenden im allgemeinen scharf gebündelte Laserstrahlen. Obwohl diese nur eine geringe Divergenz aufweisen, ergeben sich doch bei Messungen aus größeren Distanzen Abmessungen des Meßfleckes, d.h. der Auftreff-Fläche des Laserstrahles am Ziel in einer Größe, die es nicht mehr erlaubt, die Strukturen des Zieles ausreichend aufzulösen. So erreicht beispielsweise der Meßfleck eines Halbleiter-Lasers mit einer Strahldivergenz von 1mrad in 1000 m Entfernung einen Durchmesser von 1m; bei modernen Festkörper-Lasern mit einer Strahldivergenz von beispielsweise nur 0,3 mrad hat der Meßfleck in einer Entfernung von 1000 m immer noch einen Durchmesser von 300 mm. Zur Erzielung einer möglichst geringen Divergenz sind aber Durchmesser des Laserstrahls an der Austrittsfläche von typisch 10 bis 50 mm erforderlich. Bei Abtastung von Objekten im Nahbereich (bis etwa 50 m) ist damit der Meßfleck nicht durch die Strahldivergenz sondern durch den Durchmesser am Austritt bestimmt.

Es ist ein Ziel der Erfindung, bei Meß-Systemen der eingangs beschriebenen Art, zu gewährleisten, daß trotz der gegebenen Divergenz und des Strahldurchmessers an der Austrittsöffnung des Systems des Meß-Strahles am Objekt ein Meßfleck mit minimalen Abmessungen erzeugt wird.

Erfindungsgemäß wird dies dadurch erzielt, daß das optische System des Senders, und gegebenenfalls das des Empfängers, in an sich bekannter Weise zur Minimierung der Auftreff-Fläche des Sendestrahles auf einem Ziel und damit zur Erhöhung der Auflösung der Scan-Aufnahme auf mindestens ein im Objektraum befindliches Ziele fokussiert wird.

In vielen Fällen, insbesondere dann wenn es sich um ein relativ flaches, d. h. nicht sehr stark in der Tiefe gestaffeltes Objekt handelt, mag es ausreichen, vor der Scan-Aufnahme das Sende- und gegebenenfalls auch das Empfangsobjektiv auf ein bestimmtes Detail des Objektes zu fokussieren, d.h. also die Laserquelle auf dieses abzubilden. Dies kann gemäß einem weiteren Merkmal der Erfindung dadurch erfolgen, daß vor der eigentlichen Scan-Aufnahme zumindest Teilbereiche des Objektraumes durch den Entfernungsmesser in Verbindung mit der Scan-Einrichtung vermessen werden, wobei aus den Entfernungsmeßwerten Einstellwerte für die Fokussierung des optischen Systems bzw. der optischen Systeme abgeleitet werden, die zur Steuerung von Fokussiereinrichtungen für die optischen Systeme dienen.

Bei stark in der Tiefe strukturierten Objekten kann es sein, daß eine konstante Fokussierung während der Scan-Aufnahme zur Erzielung optimaler Ergebnisse nicht ausreichend ist. Um eine individuelle Fokussierung auf die verschiedenen Bereichen des Objektraumes zu ermöglichen, wird gemäß einer vorteilhaften Weiterbildung der Erfindung vor der eigentlichen Scan-Aufnahme der Objektraum durch den Entfernungsmesser in Verbindung mit der Scan-Einrichtung vermessen, wobei die Entfernungswerte zusammen mit den zugehörigen Koordinaten-Werten abgespeichert werden. Bei der eigentlichen Scan-Aufnahme und Einstellung der Scan-Einrichtung auf eine bestimmte Strahlrichtung, wird bzw. werden das optische System bzw. die optischen Systeme auf eine Entfernung fokussiert, die im ersten Meßzyklus zu den Koordinatenwerten abgespeichert worden ist, welche der momentanen Strahlrichtung entsprechen.

Gemäß einer vorteilhaften Weiterentwicklung der Erfindung wird bei der Messung eines Rasterelementes zunächst eine erste Entfernungsmessung durchgeführt, anschließend das Objektiv auf diese Entfernung eingestellt und eine weitere Messung ausgelöst wird, deren Ergebnis zusammen mit den Koordinaten des Rasterelementes abgespeichert wird.

Gemäß einer alternativen Lösung erfolgt bei der Scan-Aufnahme die Entfernungseinstellung des Objektives bei der Messung eines Rasterelementes entsprechend dem Entfernungswert, der für ein vorhergehendes bzw. benachbartes Rasterelement gemessen worden ist.

Gemäß einer anderen vorteilhaften Ausgestaltung der Erfindung erfolgt bei der Scan-Aufnahme die Entfernungseinstellung des Objektives bei der Messung eines Rasterelementes entsprechend einem Entfernungswert, der aus einer wählbaren Gruppe von vorhergehenden bzw. benachbarten Rasterelementen nach einem definierbaren Algorithmus, wie etwa der Minimums- oder der Mittelwertbildung ermittelt worden ist.

Vorzugsweise ist der zur Ermittlung der Entfernungseinstellung für das Objektiv verwendete Teilbereich des Aufnahmeraumes beliebig wählbar und wird vorzugsweise auf einem Display schematisch angezeigt. Das Display kann direkt am Meßkopf vorgesehen ist, es ist aber auch möglich, diese Bereiche auf dem Monitor eines, insbesondere portablen, Computers, der für die Steuerung des Gerätes und für die Speicherung und Auswertung der Data-Files benutzt wird, anzuzeigen.

Gemäß einem weiteren Merkmal der Erfindung ist der zur Ermittlung der Entfernungseinstellung für das Objektiv verwendete Teilbereich aus einer Anzahl vorgegebener, vorzugsweise schematisch auf einem Display angezeigter, Bereiche wählbar.

Vorzugsweise werden die Algorithmen zur Bestimmung eines Entfernungseinstellwertes für das Objektiv aus einer Vielzahl von Entfernungswerten von Rasterelementen aus einer Reihe von Funktionen, wie arithmetischer Mittelwert, geometrischer Mittelwert, Minimalwert, Maximalwert, ausgewählt.

Zweckmäßig werden für einen Bereich des Aufnahmeraumes, der für die Ermittlung eines Entfernungseinstellwertes für das Objektiv herangezogen wird, Entfernungsgrenzwerte vorgegeben, innerhalb welcher Entfernungswerte für die Berechnung des Entfernungseinstellwertes für das Objektiv verwendet werden. Diese Entfernungsgrenzwerte können über ein Keyboard bzw. eine Tastatur in digitaler oder über Einstellknöpfe, Schieber od. dgl. in analoger Form eingegeben werden.

Gemäß einem weiteren Merkmal der Erfindung wird der zur Fokussierung des Objektives verwendete Entfernungseinstellwert an einem Display angezeigt.

Weitere Merkmale der Erfindung ergeben sich aus der nachfolgenden Beschreibung eines Ausführungsbeispieles und unter Bezugnahme auf die Zeichnung.
- Fig. 1: zeigt eine Anordnung zum Vermessen eines Objektes;
- Fig. 2: zeigt schematisch und schaubildlich den Meßkopf der Einrichtung zur Durchführung des Verfahrens, und die
- Fig. 3 und 4: zeigen schematisch zwei verschiedene Lösungen zur Fokussierung des Objektives, wobei Fig. 4a eine Variante in Draufsicht und Fig. 4b diese Lösung in einem Schnitt veranschaulicht;
- Fig. 5: stellt schließlich ein Blockschaltbild der erfindungsgemäßen Einrichtung dar.

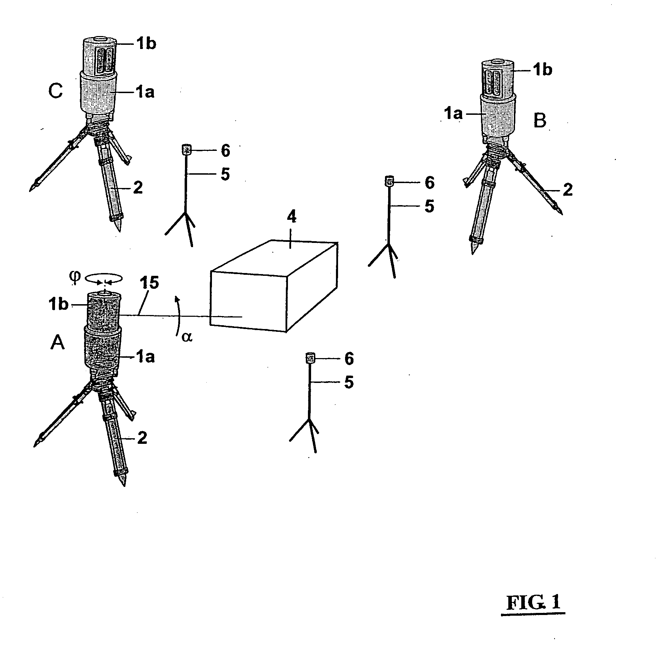

Die Fig. 1 zeigt die Anordnung zur Aufnahme eines schematisch angedeuteten Objektes 4 mit dem Ziel, ein 3-D-Modell desselben zu erstellen. Ein Laserscanner 1 wird zunächst mit seinem Stativ 2 in einer ersten Position A aufgestellt und auf das Objekt 4 ausgerichtet. Um das Objekt 4 werden eine Reihe von Retro-Reflektoren 6 positioniert, die jeweils auf Stativen 5 angeordnet sind. Der Laserscanner 1 umfaßt einen Meßkopfunterteil 1a, der am Stativ 2 befestigt ist. Im Meßkopfunterteil ist, wie weiter unten im Detail erläutert werden wird, ein Antrieb für den Meßkopfoberteil 1b vorgesehen, der diesen um eine vertikale Achse entsprechend den Pfeilen ϕ hin- und her schwenkt. Der Meßkopfoberteil 1b enthält das Laser-Entfernungsmeß-System zumindest mit einem Teil der Auswerteeinrichtung und ein rotierendes Spiegelprisma, welches den Meß-Strahl 15 um eine horizontale Achse entsprechend dem Pfeil α verschwenkt. Durch den Laserscanner wird somit der gesamte Objektraum mit dem Objekt 4 und den als Referenzmarken dienenden Retro-Reflektoren 6 aufgenommen und ein entsprechender Datafile in dem Speicher eines Computers abgelegt. Nach der ersten Aufnahme vom Standort A aus wird der Laserscanner 1 auf den Standort B transferiert, die Retro-Reflektoren 6 verbleiben aber in der gleichen Position. Der Laserscanner 1 wird wieder auf das Objekt 4 ausgerichtet und eine weitere Aufnahme durchgeführt. Um eine möglichst exakte Dokumentation sämtlicher Ansichten des Objektes zu erhalten, kann der Laserscanner noch in weitere Aufnahmepositionen gebracht werden (z.B. Position C). Die aus den verschiedenen Standorten gewonnenen Datafiles bzw. Punktewolken werden anschließend zu einem 3-D-Modell verknüpft, wobei in vielen Fällen Referenzmarken zur Deckung gebracht werden. Die Referenzmarken können Kennungen aufweisen, so daß der Rechner in der Lage ist, diese automatisch zu identifizieren und bei der Auswertung zur Deckung zu bringen, andernfalls kann eine Unterstützung durch den Bedienenden erforderlich sein. Sind die Koordinaten der Referenzmarken in einem beliebigen Koordinatensystem definiert, so kann das Objekt in diesem Koordinatensystem positioniert werden. Das 3-D-Modell des Objektes kann in beliebigen Ansichten dargestellt und mit geeigneten CAD-Programmen weiter bearbeitet werden.

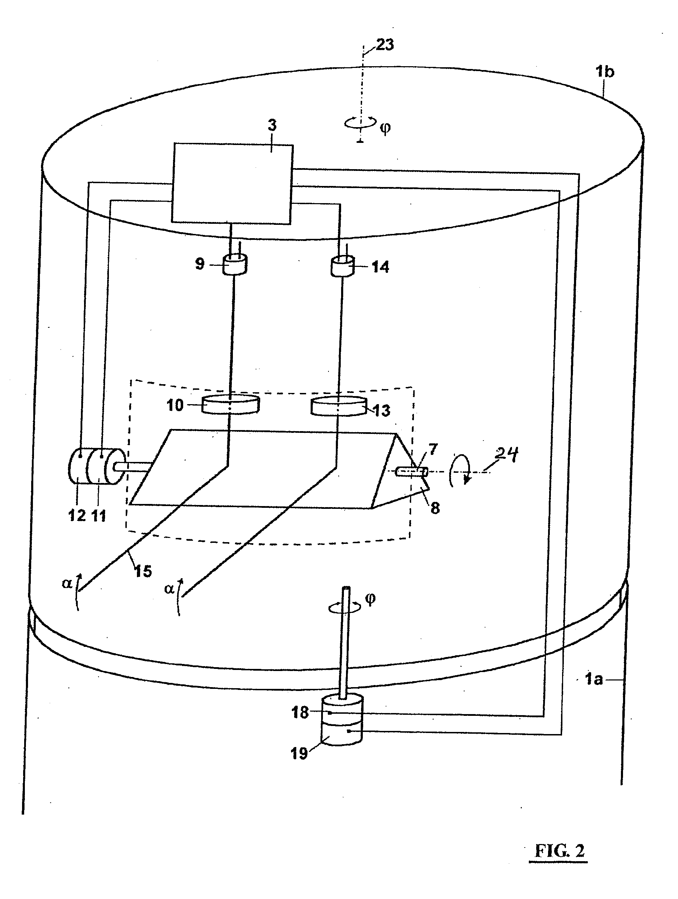

Einzelheiten werden an Hand der Fig. 2 näher erläutert. Am Meßkopfunterteil 1a, der am Stativ 2 befestigt ist, ist der Meßkopfoberteil 1b um eine vertikale Achse 23 schwenkbar gelagert. Angetrieben wird der Meßkopfoberteil 1b hierbei durch einen Motor 18. Ein auf derselben Achse angeordneter Winkeldecoder 19 meldet die jeweilige Winkelstellung des Meßkopfes an eine Auswerteeinrichtung 3 zurück. Der Meßkopfoberteil umfaßt den Laser-Entfernungsmesser und ein Spiegelprisma 8, das um eine horizontale Achse 24 drehbar ist. Angetrieben wird das Spiegelprisma von einem Motor 11, auf dessen Welle ein Winkeldecoder 12 angeordnet ist. Gesteuert wird der Antrieb des Spiegelprismas 8 von der Auswerteeinrichtung 3, die auch die Signale des Winkeldecoders 12 verarbeitet.

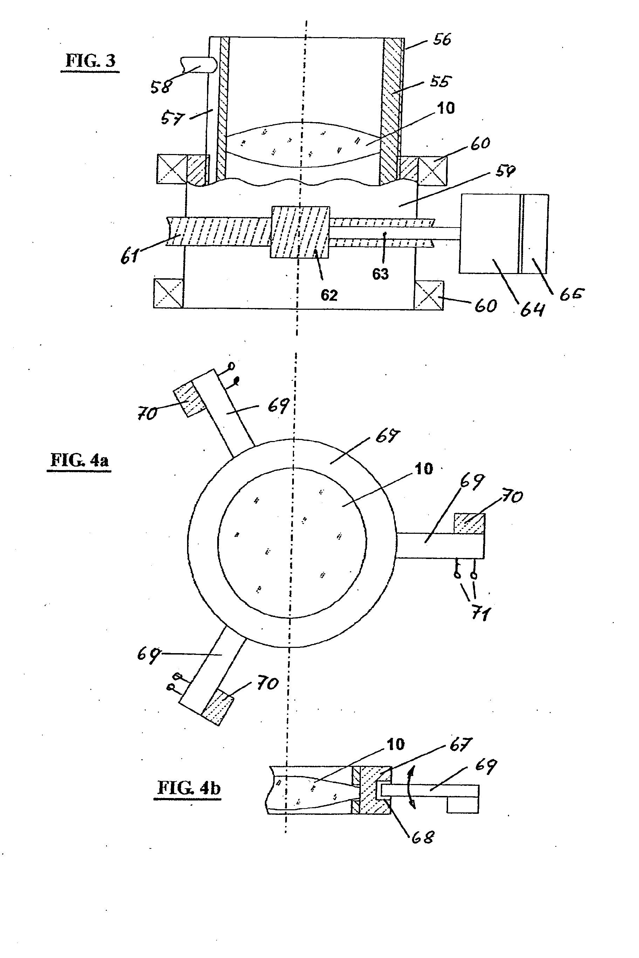

Die Auswerteeinrichtung 3 umfaßt auch die Elektronik des Entfernungsmessers und steuert einen Laser 9 an. Dieser kann aus einer Laserdiode bestehen oder auch aus einem Festkörper- oder Gas-Laser, wie zum Beispiel aus einem dioden-gepumpten, gütegeschalteten Festkörperlaser. Mit 10 ist eine Optik bezeichnet. Durch das rotierende Spiegelprisma 8 wird der Meß-Strahl 15 in Richtung des Pfeiles α abgelenkt. Parallel zum Sendekanal 9,10 ist ein Empfangskanal vorgesehen, der eine Optik 13 und eine Empfangsdiode 14 aufweist. Die optische Achse des Empfangskanales wird durch das Spiegelprisma 8 parallel zum Meß-Strahl 15 abgelenkt. Bei Geräten gemäß dem Stand der Technik ist das Objektiv 10 des Senders fest eingestellt und im allgemeinen so justiert, daß die Laserquelle ins Unendliche abgebildet wird. Gemäß der Erfindung ist das Sendeobjektiv 10 und gegebenenfalls auch das Empfangsobjektiv 13 bezüglich seiner Fokussierung verstellbar. In den Fig. 3 und 4 sind als Beispiele zwei verschiedene Lösungsvarianten dargestellt.

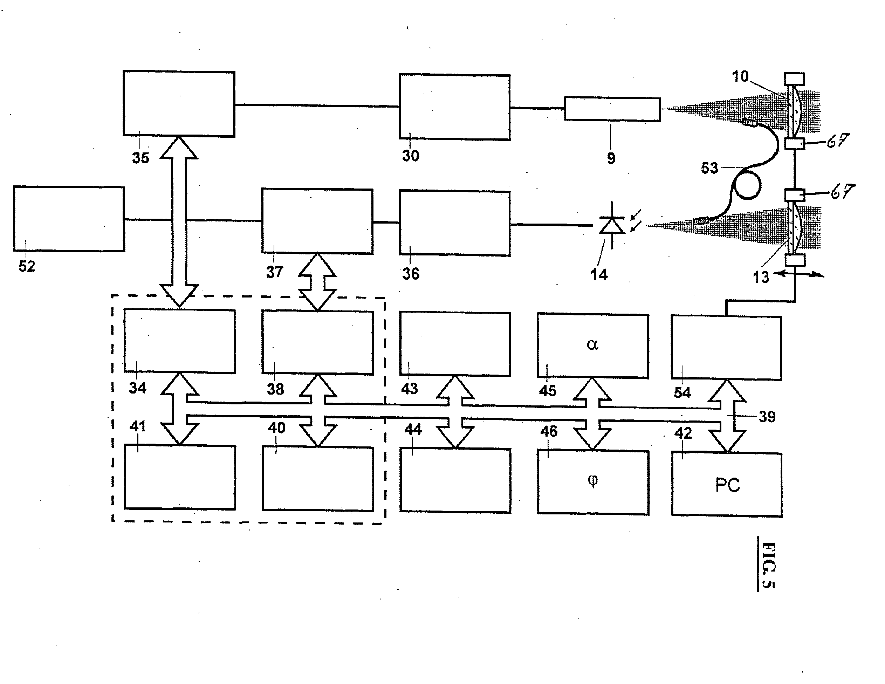

Gemäß Fig. 3 ist das Objektiv 10 in an sich bekannter Weise in einer zylindrischen Fassung 55 fixiert, die an ihrer Außenseite ein Gewinde 56 aufweist. In einer axialen Nut 57 läuft ein ortsfester Stift 58, der wohl eine axiale Verstellung der Fassung 55 zuläßt, eine Verdrehung derselben aber verhindert. Die Fassung 55 ist in eine Büchse 59 eingesetzt, die ein Innengewinde aufweist, das dem Gewinde 56 entspricht. Die Büchse 59 ist in zwei Lagern 60 gelagert, welche die Büchse 59 in axialer Richtung abstützen. Die Büchse 59 trägt an ihrem Außenmantel ein Schneckenrad 61, welches mit einer Schnecke 62 kämmt. Ein Elektromotor 64, auf dessen Welle 63 die Schnecke 62 angeordnet ist, versetzt die Büchse 59 in Drehung und verstellt damit über das Gewinde 56 die Fassung 55 mit dem Objektiv in axialer Richtung. Angesteuert wird der Motor 64, wie im Zusammenhang mit der Beschreibung der Fig. 5 näher ausgeführt werden wird, von der Steuerelektronik 3. Ein auf der Motorwelle angeordneter Winkel-Decoder 65 meldet den vom Motor überstrichenen Drehwinkel und damit die axiale Position des Objektives an die Steuereinheit 3 zurück.

Eine Variante, die wohl einen kleineren Verstellbereich aufweist, jedoch eine sehr hohe Verstellgeschwindigkeit zuläßt, zeigen die Fig. 4a und 4b. Das Objektiv 10 ist in einem Ring 67 gefaßt, der an seinem Umfang eine Nut 68 aufweist. In diese Nut greifen 3 Piezo-Stellglieder 69 ein, die bei 70 ortsfest gehalten sind. Die Stellglieder 69 sind jeweils um 270° versetzt angeordnet. Wird an die Anschlüsse 71 der Stellglieder eine Spannung angelegt, so biegen sie sich durch und verstellen den Ring 67 mit dem Objektiv 10 in axialer Richtung.

Die Fig. 5 zeigt in Form eines Blockdiagramms schematisch den Aufbau des Steuergerätes 3 des Laser- Scanners gemäß der Erfindung, wobei in diesem Diagramm nur die den Ablenkeinheiten nachgeschalteten Systeme dargestellt sind. Der Laser-Transmitter 35 dieser Anlage arbeitet mit einem passiv-gütegeschaltetem Festkörperlaser 9, der durch Dioden 30 gepumpt wird. Im Gegensatz zu bekannten Laserentfernungsmessern, die mit Laserdioden arbeiten, kann der Festkörper-Laser 9 nicht durch den Prozessor 34 synchronisiert werden, sondern ist freilaufend. Es ist daher notwendig, dem Empfänger 14 neben den Echo-Impulsen auch die Sendeimpulse zuzuführen. Dies kann vorteilhaft mittels eines im Strahlengang des Festkörperlasers 9 eingebrachten Lichtleiters 53 erfolgen. Das aus dem Sende-Strahlengang abgezweigte Laser-Licht wird über den Lichtleiter 53 direkt dem Empfänger 14 zugeleitet. Alternative Lösungsansätze basieren aüf eigenen separaten Empfängern zur Erzeugung eines elektrischen Pulses für die Laufzeitmessung.

Neben der Sendeoptik 10 ist eine Empfängeroptik 13 vorgesehen, deren optische Achse parallel zu der der Sendeoptik 10 ausgerichtet ist. Die Empfängeroptik 13 konzentriert die von einem im Strahlengang der Sendeoptik befindlichem Ziel im allgemeinen diffus reflektierte Strahlung auf die Empfangsdiode 14. Mit Vorteil wird als Empfangsdiode 14 eine Avalanche-Diode eingesetzt. Vorzugsweise sind Sendelaser und Empfangsdiode in ihrer spektralen Charakteristik aufeinander abgestimmt, wobei die Empfangsdiode ihre maximale spektrale Empfindlichkeit in dem Bereich aufweist, in welchem der Sendelaser maximal emittiert. Da die Empfangsdiode 14 aber neben der von dem Sendelaser emittierten und vom Ziel reflektierten Strahlung viel Störstrahlung in Form von Tageslicht oder Licht von den verschiedensten Kunstlichtquellen empfängt, kann es vorteilhaft sein, der Empfangsdiode ein möglichst schmalbandiges, optisches Filter vorzusetzen, welches seine maximale Transmission in demjenigen Spektralband aufweist, in welchem der Laser 9 emittiert.

In dem mehrzielfähigen Empfangskanal, der von einem Clock-Generator 52 gesteuert wird und aus einer Verstärker- und Analogsignalprozessorstufe 36 und einem Analog-/Digitalwandler 37 besteht, werden der Sendeimpuls und der Echo-Impuls bzw. die Echoimpulse digitalisiert und weiter verarbeitet. Unter Berücksichtigung der konstanten Laufzeit des Referenz-Sendeimpulses im Lichtleiter 53 wird aus der Zeitdifferenz zwischen dem Eintreffen des Sendeimpulses und des Echo-Impulses die Entfernung des jeweiligen Objektes ermittelt.

Getaktet wird die gesamte Einrichtung durch einen Clock-Generator 52. Der Prozessor 34 und der Datenspeicher 38 sind durch einen Datenbus miteinander verbunden, der schematisch angedeutet und mit 39 bezeichnet ist. An diesen Datenbus 39 sind ferner ein Programmspeicher 40 für den Prozessor 34 angeschlossen, sowie ein Datenzwischenspeicher 41, in welchen nach einer ersten Auswertung durch den Prozessor 34 Rohdaten abgelegt werden, die am Ende des Meßzyklus ausgelesen werden. Aus diesen Rohdaten wird mit im Programmspeicher abgelegten Algorithmen ein Entfernungswert für jedes einzelne Rasterelement ermittelt.

Zusätzlich zu dem beschriebenen Empfangskanal kann ein zweiter Empfangskanal oder können mehrere weitere, kolineare Empfangskanäle mit reduzierter Empfindlichkeit vorgesehen sein, wobei bei der Messung der retro-reflektierenden Referenzmarken einer der unempfindlichen Empfangskanäle zur Entfernungsmessung herangezogen wird.

Die Steuerung des Antriebes des Spiegelprismas 8 erfolgt durch die Einheit 45, die des Meßkopfantriebes durch die Einheit 46.

Das Gerät verfügt über zwei Meß-Modi: Der erste Modus dient einer Grobaufnahme des Objektraumes, der gegebenenfalls mit reduzierter räumlicher Auflösung und entsprechend erhöhter Meßgeschwindigkeit durchgeführt wird. Eine Messung gemäß dem Modus 1 wird vor der eigentlichen Messung durchgeführt und liefert als Ergebnis einen Data-File, dessen Datensätze zu jedem Koordinatenpaar einen Entfernungswert enthalten. Dieser Data-File wird in dem Speicher 43 abgelegt. Während des zweiten Modus, der eigentlichen Scan-Aufnahme, wird der Objektraum vom Entfernungsmesser mittels der Scan-Einrichtung abgetastet. Bei der Messung eines Rasterelementes, das durch ein Koordinatenpaar definiert ist, wird aus dem Speicher 43, der zu diesen Koordinaten gehörige Entfernungswert, der im ersten Meß-Modus ermittelt worden ist, ausgelesen. Die Steuereinheit 54 steuert den Antrieb 64 bzw. 69 des Objektives 10 und fokussiert dasselbe auf das Ziel. Bei Anwendung eines solchen Verfahrens sind extrem schnelle Stellglieder erforderlich, wie sie beispielsweise in Fig. 4 dargestellt sind.

Gemäß einem alternativen Verfahren wird durch den Prozessor 34 der in dem ersten Meßmodus erzeugte Data-File durch Mittelwertbildung oder andere Algorithmen im Sinne einer Glättung des Entfernungsbildes dieses Modus bearbeitet, so daß die Verstellgeschwindigkeiten bei der Fokussierung verringert werden. Im Extremfall wird durch diese Algorithmen ein einziger Einstellwert ermittelt, der für den gesamten Aufnahme-Scan verwendet wird.

Die weitere Verarbeitung mehrerer Scan-Aufnahmen zur Erzeugung eines 3-D-Models des Zielraumes erfolgt in einem Rechner 42. Diese Verarbeitung erfolgt in der Regel offline. Hierbei werden die bei den einzelnen Scan-Aufnahmen gewonnen Data-Files ("Punkt-Wolken") in dem Rechner 42 miteinander verschmolzen, wobei die Referenzmarken zur Deckung gebracht werden. Das Ergebnis ist ein 3-D-Modell, das als ein Data-File zur Verfügung steht und beispielsweise mit Konstruktions-, Geodäsie-, Architektur- oder ähnlichen Computerprogrammen weiter bearbeitet werden kann.

## Patentansprüche

1. Verfahren zur Aufnahme eines Objektraumes mit einem opto-elektronischen Entfernungsmesser nach einem Signal-Laufzeitverfahren mit einer Sendeeinrichtung zum Aussenden von optischen Signalen, insbesondere von Laser-Strahlung, und einer Empfangseinrichtung zum Empfangen von optischen Signalen, insbesondere von Laserstrahlung, die von im Zielraum befindlichen Objekten reflektiert wird, wobei sowohl der Sendeals auch der Empfangseinrichtung optische Systeme vorgeschaltet sind, ferner mit einer Scan-Einrichtung zur Ablenkung der optischen Achsen von Sende- und Empfangseinrichtung in vorzugsweise zwei orthogonale Richtungen, und die Scan-Einrichtung mit Positions- bzw. Winkelsensoren verbunden ist, die zu jeder Abtastrichtung der optischen Achsen entsprechende Koordinaten ausgeben, ferner mit einer Auswerteeinrichtung, die aus der Laufzeit bzw. der Phasenlage des ausgesandten optischen Signals Entfernungswerte ermittelt, wobei jedem Entfernungswert entsprechende Koordinaten zugeordnet sind,
**dadurch gekennzeichnet, daß** das optische System (10) des Senders (9) und gegebenenfalls das (13) des Empfängers (14) in an sich bekannter Weise zur Minimierung der Auftreff-Fläche des Sendestrahles auf ein Ziel und damit zur Erhöhung der räumlichen Auflösung der Scan-Aufnahme auf mindestens ein im Objektraum befindliches Ziele fokussiert wird.

2. Verfahren nach Patentanspruch 1, **dadurch gekennzeichnet, daß** vor der eigentlichen Scan-Aufnahme zumindest Teilbereiche des Objektraumes durch den Entfernungsmesser in Verbindung mit der Scan-Einrichtung vermessen werden, wobei aus den Entfernungsmeßwerten Einstellwerte für die Fokussierung des optischen Systems (10) bzw. der optischen Systeme (10 bzw. 13) abgeleitet werden, die zur Steuerung von Fokussiereinrichtungen (64 bzw. 69 ) für das optische System (10) bzw. die optischen Systeme (10, 13) dienen.

3. Verfahren nach Patentanspruch 1 oder 2, **dadurch gekennzeichnet, daß** vor der eigentlichen Scan-Aufnahme der Objektraum durch den Entfernungsmesser in Verbindung mit der Scan-Einrichtung vermessen wird, wobei die Entfernungswerte zusammen mit den zugehörigen Koordinaten-Werte abgespeichert werden, und bei der eigentlichen Scan-Aufnahme und Einstellung der Scan-Einrichtung auf eine bestimmte Strahlrichtung, das optische System (10) bzw. die optischen Systeme (10, 13) auf eine Entfernung fokassiert wird bzw. werden, die im ersten Meßzyklus zu den Koordinatenwerten abgespeichert worden ist, welche der momentanen Strahlrichtung (α, ϕ) entsprechen.

4. Verfahren nach einem der vorhergehenden Ansprüche, **dadurch gekennzeichnet, daß** bei der Messung eines Rasterelementes zunächst eine erste Entfernungsmessung durchgeführt, anschließend das Objektiv (10) auf diese Entfernung eingestellt und eine weitere Messung ausgelöst wird, deren Ergebnis zusammen mit den Koordinaten des Rasterelementes abgespeichert wird.

5. Verfahren nach einem der vorhergehenden Ansprüche, **dadurch gekennzeichnet, daß** bei der Scan-Aufnahme die Entfemungseinstellung des Objektives (10) bei der Messung eines Rasterelementes entsprechend dem Entfernungswert erfolgt, der für ein vorhergehendes bzw. benachbartes Rasterelement gemessen worden ist.

6. Verfahren nach einem der vorhergehenden Ansprüche, **dadurch gekennzeichnet, daß** bei der Scan-Aufnahme die Entfernungseinstellung des Objektives (10) bei der Messung eines Rasterelementes entsprechend einem Entfernungswert erfolgt, der aus einer wählbaren Gruppe von vorhergehenden bzw. benachbarten Rasterelementen nach einem definierbaren Algorithmus, wie etwa der Minimums- oder der Mittelwertbildung ermittelt worden ist.

7. Verfahren nach einem der Patentansprüche 2 bis 6, **dadurch gekennzeichnet, daß** der zur Ermittlung der Entfernungseinstellung für das Objektiv (10) verwendete Teilbereich des Aufnahmeraumes beliebig wählbar ist und vorzugsweise auf einem Display schematisch angezeigt wird.

8. Verfahren nach einem der Patentansprüche 2 bis 6, **dadurch gekennzeichnet, daß** der zur Ermittlung der Entfernungseinstellung für das Objektiv (10) verwendete Teilbereich aus einer Anzahl vorgegebener, vorzugsweise schematisch auf einem Display angezeigter, Bereiche wählbar ist.

9. Verfahren nach einem der Patentansprüche 2 bis 6, **dadurch gekennzeichnet, daß** die Algorithmen zur Bestimmung eines Entfernungseinstellwertes für das Objektiv (10) aus einer Vielzahl von Entfernungswerten von Rasterelementen aus einer Reihe von Funktionen, wie arithmetischer Mittelwert, geometrischer Mittelwert, Minimalwert, Maximalwert, ausgewählt werden, und daß vorzugsweise
für einen Bereich des Aufnahmeraumes, der für die Ermittlung eines Entfernungseinstellwertes für das Objektiv (10) herangezogen wird, Entfernungsgrenzwerte vorgegeben werden, innerhalb welcher Entfernungswerte für die Berechnung des Entfernungseinstellwertes für das Objektiv (10) verwendet werden.

10. Verfahren nach einem der vorhergehenden Patentansprüchen, **dadurch gekennzeichnet, daß** der zur Fokussierung des Objektives (10) verwendete Entfernungseinstellwert an einem Display angezeigt wird.
